Europäisches Patentamt

European Patent Office

Office européen des brevets

(11) Numéro de publication: **0 028 980 B2**

(12) **NOUVEAU FASCICULE DE BREVET EUROPEEN**

(45) Date de publication de nouveau fascicule du brevet:
28.06.95

(51) Int. Cl.6: **B21B 27/00**, C22C 38/18,
//B21B1/26

(21) Numéro de dépôt: 80401590.7

(22) Date de dépôt: 06.11.80

(54) **Cylindre de laminoir bimétallique pour train à bande à chaud.**

(30) Priorité: **13.11.79 FR 7927952**

(43) Date de publication de la demande:
**20.05.81 Bulletin 81/20**

(45) Mention de la délivrance du brevet:
**14.12.83 Bulletin 83/50**

(45) Mention de la décision
concernant l'opposition:
**28.06.95 Bulletin 95/26**

(84) Etats contractants désignés:
**AT DE GB SE**

(56) Documents cités:
BE-A- 863 704          DE-A- 1 284 294
DE-A- 2 422 629        DE-C- 562 829
FR-A- 1 574 542        FR-A- 2 382 955
FR-E- 38 706           GB-A- 279 149
GB-A- 504 224          GB-A- 1 271 959
JP-A- 6 220 178        US-A- 3 855 015

METALS ABSTRACTS, vol. 8, no. 11, novembre 1975, abrégé 51-0746, page 2024, Londres GB, Ohio, US B.M. MAKSIMOV: "Experience in making cast rolls for hot-rolling (Mills)"

(73) Titulaire: **UNION SIDERURGIOUE DU NORD ET DE L'EST DE LA FRANCE par abréviation "USINOR"**
**La Défense 9,**
**4, place de la Pyramide**
**F-92800 Puteaux (FR)**

(72) Inventeur: **Werquin, Jean-Claude**
**342 Avenue Jean Jaurès**
**F-59790 Ronchin (FR)**
Inventeur: **Mercier, Bernard**
**20 Avenue des Martyrs de la Résistance**
**F-08200 Sedan (FR)**

(74) Mandataire: **Moncheny, Michel et al**
**c/o Cabinet Lavoix**
**2 Place d'Estienne d'Orves**
**F-75441 Paris Cedex 09 (FR)**

EP 0 028 980 B2

Rank Xerox (UK) Business Services
(3.10/3.09/3.3.3)

METALS ABSTRACTS, vol. 12, no. 12, décembre 1979, abrégé 31-3213, page 87, LONDRES GB, OHIO, US A. MAGNEE: "Behaviour in wear of roll steels for hot working"

METALS ABSTRACTS, vol. 12, no. 12 décembre 1979, abrégé 52-1288, page 165, LONDRES GB, OHIO US J.C. WEROUIN: "New developments of Rolls with high chromium contents for hot and cold rolling of ferrous and non-ferrous metals"

"Steel in the USSR" December 1978, pages 688 to 690

"Development, properties and applications of High Chromium Cast Steel Rolls" (Walter Patt, 1979)

"The Recent Development of Rolls" (Nippon Steel Technical Report Overseas No. 5, March 1974)

## Description

La présente invention concerne les cylindres de laminoirs bimétalliques eu acier destinés à équiper les cages dégrossiseuses ou finisseuses d'un train à bande à chaud.

On se trouve confronte en ce qui concerne les cylindres de ces cages de train à chaud à un problème désigné par le terme anglais de "banding" et qui consiste en un phénomène d'incrustation à la surface des cylindres des oxydes durs provenant de la bande et qui se forment sur cette dernière aux températures élevées de laminage. Ces oxydes sont arrachés de la surface du cylindre, le cas échéant en entraînant certaines parties du métal et sont ensuite laminés dans les cages suivantes avec la bande en provoquant une détérioration de la qualité de cette dernière, par apparition de défauts de surface appelés "gravelures". Ce problème est très important car il conduit soit à abaisser les températures de laminage pour limiter l'oxydation, ce qui n'est pas souhaitable, soit à effectuer le remplacement fréquent des cylindres ce qui se traduit par un abaissement du rendement global du train de laminoir.

Une première solution pour tenter de retarder ce phénomène a consisté à réaliser des cylindres en fonte au chrome les teneurs en chrome pouvant aller de 12 à 20%, alors que la teneur an carbone est de l'ordre de 2,5%. Cette première solution s'est traduite par une certaine amélioration, nontamment au niveau de la dureté du cylindre. Cependant, cette amélioration s'est révélée insuffisante car avec de telles fontes au chrome, il se forme dans le matériau du cylindre des carbures qui se brisent en laissant apparaître des fissures, ce qui favorise une incrustation des oxydes.

Dans une deuxième tentative de solution de ce problème, on a cherché à utiliser des aciers contenant entre 1,3 et 1,9% de carbone et à peu près 1 à 1,5% de chrome, un certain nombre d'éléments d'alliage étant par ailleurs présents pour améliorer la dureté. Cependant, la encore cette solution ne s'est pas révélée tout à fait satisfaisante car l'oxyde qui se forme à la surface du cylindre est fragile et s'écaille facilement ce qui accroît le risque de collage entre le cylindre et la bande et favorise le phénomène d'incrustation puisqu'en s'écaillant l'oxyde arrache une partie du métal. Pour tenter de palier cet inconvénient, on est conduit à prévoir une lubrification intense ce qui complique l'installation et en augmente le coût. De plus de tels cylindres présentent une dureté qui est insuffisante pour s'opposer au phénomène de "banding" ou d'incrustation.

La problème que vise à résoudre l'invention est par conséquent de fournir des cylindres de laminage destinés à équiper des cages dégrossiseuses ou finisseuses d'un train à bande à chaud, ces cylindres bien que travaillant dans des conditions particulièrement difficiles, devant avoir une durée d'utilisation accrue et être moins sensibles au phénomène d'incrustation.

La solution préconisée repose sur une approche originale qui consiste à associer de façon plus étroite que dans le passé les teneurs en carbone et en chrome et à rechercher entre ces deux éléments un rapport optimal pour l'application envisagée.

Le problème de l'invention est résolu par les caractéristiques selon la partie caractérisante de la revendication 1.

Des cylindres de laminoir bimétalliques sont connus per se dans l'état de la technique, voir US-A-3 855 015. En plus, il a déjà été réalisé un cylindre monobloc de petit diamètre pour un laminoir à froid du type "Sendzimir" ayant des propriétés exigées tout à fait différentes de celles d'un cylindre de laminoir d'un train à bande à chaud.' voir "Steel in the USSR" Décembre 1978, pages 688 à 690, notamment tableau 1 ligne 3, dont la teneur en carbone égale 1,06% et la teneur en chrome égale 11,00%. De la on ne pouvait pas déduire que des nuances d'acier à teneur éleveé en chrome et à faible teneur en carbone pourraient être utilisables pour l'application envisagée selon l'invention.

Contrairement à ce qui se produit avec les fontes à haut chrome, la teneur en carbone reste limitée ce qui permet d'éviter la formation de carbures intergranulaires de type $M_7C_3$ qu'aucun traitement thermique ne peut mettre en solution. Par ailleurs, la teneur en chrome est suffisante pour obtenir une matrice riche en chrome mais demeure cependant dans des limites telles que l'oxyde de chrome peut se former dans une certaine mesure, en constituant une couche lubrifiante protectrice, ce qui constitue un élément positif. Il est donc essentiel de respecter les rapports et les valeurs donnés ci-dessus.

On a pu constater qu'un cylindre présentant une telle composition possède une structure beaucoup plus favorable qu'une fonte au chrome ou qu'un acier de type adamite, en particulier en ce qui concerne les carbures secondaires qui sort extrêmement fins et dispersés.

Un cylindre suivant l'invention peut être réalisé par un procédé de coulée composite, de préférence par centrifugation, ce type de procédé allant dans le sens souhaité en ce qui concerne l'affinage et la répartition des carbures. A titre d'exemple, un tel rouleau peut avoir la composition suivante:

- C : 0,96
- Mn : 0,58
- Si : 1,4
- Ni : 0,62

- Cr : 11,5
- Mo : 1,13

Pour cette composition, le rapport

$$\frac{Cr}{C}$$

est voisin de 12 et la teneur en équivalent carbone égale à 1.535.

Cette composition est bien entendu celle de la table de travail ou zone externe du cylindre, dont le coeur peut être réalisé par exemple en fonte noduiaire. Après centrifugation, le cylindre subit un traitement thermique approprié constitué par exemple par une simple trempe à l'air à partir d'une température de 1.000°C, le cas échéant avec un palier au cours du refoidissement, ces traitéments étant classiques et n'ayant donc pas à être décrits plus en détail.

Un tel cylindre présente une dureté supérieure à 70 shore C.

Des essais ont été effectués, notamment en utilisant un tel cylindre avec un cylindre en fonte au chrome, de conception classique et de composition C : 2,9-Si : 0,6-Mn : 0,91-Cr : 18,0-Ni : 0,92-Mo : 1,45. Ces deux cylindres one été montés ensemble, en inversent régulièrement leurs positions, dans la cage F3 d'un train continu àchaud et l'on a pu constater qu'après une durée de fonctionnement équivalente, le cylindre suivant l'invention ne présentait aucune usure géométrique ni aucune trace d'incrustation d'oxyde alors que le cylindre classique présentait déjà un début notable de "banding".

Le but recherché est donc bien atteint et un cylindre ayant dans sa zone de travail la composition revendiquée, a dans les conditions d'utilisation particulièrement difficiles qui sont celles rencontrées dans des cages dégrossiseuses et dans les premières cages finisseuses d'un train a chaud, une tenue très sensiblement améliorée par rapport aux cylindres connus ce qui permet d'améliorer dans les mêmes proportions le rendement global du train.

## Revendications

1. Cylindre de laminoir bimétallique en acier pour cage dégrossisseuse ou finisseuse d'un train à bande à chaud, caractérisé, en ce que, dans sa zone externe de travail, ce cylindre est réalise en un acier au chrome dans lequel le rapport entre les teneurs respectives en chrome et en carbone est comons entre 7 et 12 et dans lequel la teneur en équivalent carbone est comprise entre 1,5 et 1,7%, cette teneur en équivalent carbone étant calculée comme étant la somme de la teneur en carbone et de la teneur en chrome, cette dernière affecrée d'un coefficient 0,05.

## Claims

1. A bimetallic steel rolling mill roll, for a roughing or finishing stand of a hot strip train, wherein, at least in the outer operating region of the roll, the latter is made from chrome steel in which the ratio between the respective contents of chromium and carbon is between 7 and 12 and in which the content of equivalent carbon is between 1.5 and 1.7 %, said content of equivalent carbon being calculated as the sum of the content of carbon and the content of chromium, the latter being given a coefficient of 0.05.

## Patentansprüche

1. Bimetall-Walzwerkswalze aus Stahl für ein Vorwalzgerüst oder ein Fertiggerüst einer Band-Warmwalzstraße, dadurch **gekennzeichnet**, daß die Walze in ihrem Außenarbeitsbereich aus einem Chromstahl hergestellt ist, bei dem das Verhältnis zwischen den Chromgehaltsangaben und den Kohlenstoffgehaltsangaben zwischen 7 und 12 liegt, und der Kohlenstoff-Äquivalentgehalt zwischen 1,5 und 1,7 % liegt, wobei der Kohlenstoff-Äquivalentgehalt als die Summe aus Kohlenstoffgehalt und Chromgehalt ermittelt ist und dem letzten ein Koeffizient 0,05 zugewiesen ist.